# EUROPEAN PATENT SPECIFICATION

(11) **EP 2 481 709 B1**
(45) Date of publication and mention of the grant of the patent: **07.03.2018**
(21) Application number: 10817356.8
(22) Date of filing: 18.08.2010
(51) Int. Cl.: C01F 17/00, C09K 3/14, C04B 35/626, B82Y 30/00

(54) **METHOD FOR PREPARING A CERIUM CARBONATE COMPOUND AND METHOD FOR PREPARING CERIUM OXIDE**
VERFAHREN ZUR HERSTELLUNG EINER CERIUMCARBONATVERBINDUNG UND VERFAHREN ZUR HERSTELLUNG VON CERIUMOXID
PROCÉDÉ DE PRÉPARATION D'UN COMPOSÉ CARBONATE DE CÉRIUM ET PROCÉDÉ DE PRÉPARATION D'OXYDE DE CÉRIUM

(30) Priority: 21.09.2009 KR 20090088912; 17.08.2010 KR 20100079430
(43) Date of publication of application: 01.08.2012
(73) Proprietor: LG Chem, Ltd., Youngdungpo-gu Seoul 150-721 (KR)
(72) Inventor: CHO, Seung-Beom, Daejeon 305-340 (KR); CHOI, Sang-Soon, Daejeon 305-810 (KR); CHO, Jun-Yeon, Daejeon 305-340 (KR)
(74) Representative: Hoffmann Eitle
(86) International application number: PCT/KR2010/005459
(87) International publication number: WO 2011/034287

(56) References cited:
- EP-A1- 1 043 379
- WO-A1-99/31195
- WO-A1-2008/114972
- WO-A1-2008/136593
- KR-A- 20080 097 954
- KR-B1- 100 786 961
- US-A- 5 938 837
- HISANOBU WAKITA ET AL: "A Synthetic Study of the Solid Solutions in the Systems and La2(CH3)3.8H2O-Ce2(CO3)3.8H2O and La(OH)CO3-Ce(OH)CO3", BULLETIN OF THE CHEMICAL SOCIETY OF JAPAN, vol. 52, no. 2, 1 January 1979 (1979-01-01), pages 428-432, XP055206877, ISSN: 0009-2673, DOI: 10.1246/bcsj.52.428

## Description

### BACKGROUND OF THE INVENTION

### (a) Field of the Invention

The present invention relates to a method for preparing a cerium carbonate-based compound which can be used for preparing the cerium oxide as a precursor. More specifically, the present invention relates to a method for preparing a cerium carbonate-based compound, which is capable of easily controlling the crystalline structure, size, shape, or etc. of the cerium carbonate-based compound, and of preparing the cerium carbonate-based compound efficiently at low cost, a method for preparing cerium oxide, a crystalline cerium oxide and a CMP slurry using the same.

### (b) Description of the Related Art

The cerium oxide (CeO₂) is a highly functional ceramic material that is widely used for catalysts, fluorescent substances, cosmetics, and the like. The cerium oxide has recently been spotlighted as a chemical mechanical polishing (CMP) agent for the planarization of a semiconductor substrate. Such cerium oxide is generally prepared by a gas-phase method, a solid-phase method, and a liquid-phase method.

The liquid-phase method for preparing cerium oxide powder is a method of preparing cerium oxide directly from a trivalent or tetravalent cerium salt starting material with the addition of a pH adjuster, such as ammonia, and is subdivided into a precipitation method, a hydrothermal method, and the like. The liquid-phase method has an advantage that the raw material and equipment costs are not expensive. However, there is a difficulty in controlling the particle size of cerium oxide.

The gas-phase method for preparing cerium oxide powder is a method of preparing cerium oxide directly by vaporizing a cerium metal salt precursor and combining the vaporized precursor with oxygen, etc., and is subdivided into a flame combustion decomposition method, a gas condensation decomposition method, a plasma decomposition method, a laser vaporization method, and the like. However, this gas-phase method has difficulty in mass production because the unit cost of the cerium metal salt precursor and equipment costs are expensive. The gas-phase method still remains in research step.

WO 2008/136593 discloses a cerium oxide powder for an abrasive; a CMP slurry including the same; and a shallow trench isolation (STI) process using the CMP slurry. At least two kinds of cerium oxides prepared by using cerium carbonates having different crystal structures are mixed in an appropriate ratio and used as an abrasive for CMP slurry, thereby adjusting required polishing properties of the CMP slurry.

EP 1 043 379 A1 discloses an abrasive comprising a slurry comprising a medium and dispersed therein at least one of i) cerium oxide particles constituted of at least two crystallites and having crystal grain boundaries or having a bulk density of not higher than 6.5 g/cm3 and ii) abrasive grains having pores.

Wakita et al., Bull. Chem. Soc. Jpn. 1979, vol. 52, no. 2, pp. 428-432 describes the thermal decomposition of lanthanite-(Ce) in air and in a stream of nitrogen.

The solid-phase method for preparing cerium oxide powder is a method of preparing cerium oxide from a precursor material through a sintering process. The cerium carbonate-based compounds are widely used, and the kind and shape, etc. thereof can affect the properties and shape of cerium oxide prepared therefrom. Thus, in order to regulate the desired ranges of properties and shape of cerium oxide, there is a need for a method for preparing a cerium carbonate-based compound with easy control of kinds and shape, etc. of cerium carbonate-based compounds.

However, it is not sufficient to develop the method for preparing the cerium carbonate-based compound with easy control of the kind and shape, etc. as yet. Since the raw materials for preparing the cerium carbonate-based compound is also relatively expensive, there is still a cost problem in the method for preparing the cerium carbonate-based compound. Moreover, in case that the cerium oxide is prepared from the cerium carbonate-based compound obtained according to the previously-known method, the cerium oxide with uniform particle size is hard to be obtained, thereby causing deterioration of the properties, such as polishing property of cerium oxide.

### SUMMARY OF THE INVENTION

The present invention provides a method for preparing cerium carbonate-based compound. The method can control easily the crystalline structure, size, shape, or etc. of the cerium carbonate-based compound, and prepare the cerium carbonate-based compound efficiently at low cost.

Another embodiment of the present invention provides a method for preparing the cerium oxide with uniform particle size by using the method for preparing the cerium carbonate-based compound.

A further embodiment of the present disclosure provides a crystalline cerium oxide and CMP slurry including the same, thereby showing more uniform particle size and excellent polishing property.

### DETAILED DESCRIPTION OF THE EMBODIMENTS

Therefore, an embodiment of the present invention provides a method for preparing cerium carbonate-based compound, the method comprising the steps of reacting Lanthanite-(Ce) about 50°C or higher to produce the cerium carbonate-based compound including cerium oxycabonate hydrate (Ce₂O(CO₃)₂ · H₂O) with an orthorhombic crystal structure, cerium hydroxycarbonate (Ce(OH) · (CO₃)) with a hexagonal crystal structure, or a mixture thereof.

Further embodiment of the present invention provides a method for preparing cerium oxide, the method comprising the steps of obtaining cerium carbonate-based compound according to the method, and sintering the cerium carbonate-based compound.

Also disclosed herein is a crystalline cerium oxide comprising two or more than cerium oxide particles on which two or more than boundary for defining two or more than crystal grain are formed and the each crystal grain at least one of cerium oxide crystal.

A further embodiment of the present disclosure discusses a CMP slurry comprising the crystalline cerium oxide powder.

Hereinafter, the method for preparing a cerium carbonate-based compound and the method for preparing cerium oxide using the same in accordance with an embodiment of the present invention will be described in more detail.

The method for preparing a cerium carbonate-based compound as known generally, is to prepare the compound by largely reacting cerium salt such as cerium nitrate, etc. and urea in aqueous solvent.

According to the known method, as summarized in following reaction scheme I, urea is heat-decomposed to form ammonia or ammonium salt thereof, and carbon dioxide or carbonate thereof. The produced carbon dioxide or carbonate thereof reacts with cerium salt or cerium ion derived from the cerium salt to obtain cerium carbonate-based compound which can be used for preparing the cerium oxide as a precursor. In the process, if the reaction temperature is low, cerium oxycabonate hydrate (Ce₂O(CO₃)₂ · H₂O) with an orthorhombic crystal structure can be obtained. In case of low reaction temperature, a part of the cerium salt or cerium ion is hydrolyzed and then participates in the reaction to produce cerium hydroxycarbonate (Ce(OH) · (CO₃)) with a hexagonal crystal structure. It has been known generally that the physicochemical properties and shape, etc. of cerium oxide are dependent on the kind of precursor selected from cerium oxycabonate hydrate (Ce₂O(CO₃)₂ · H₂O) or cerium hydroxycarbonate (Ce(OH) · (CO₃)), or the size, shape and amount of the precursor.

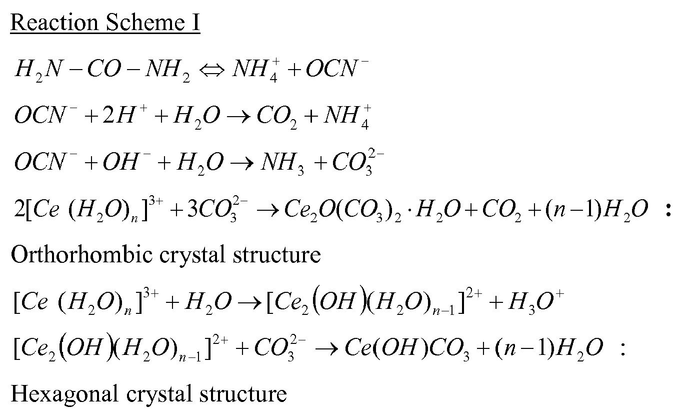

However, various gases are generated in urea pyrolyis according to the known method, and can increase the reaction pressure highly. In particular, high temperature and high pressure are required for preparing the cerium hydroxycarbonate (Ce(OH) · (CO₃)) with a hexagonal crystal structure, thereby making it difficult to selectively prepare the hexagonal compound.

It has been reported that various side reactions as well as the formation of ammonia and carbon dioxide in the urea pyrolysis, produce different organic by-products (Thermochmica Acta 424(2004) 131-142).

As a result, the known method for preparing the cerium carbonate-based compound requires a washing step for removing the organic by-products after the production of the cerium carbonate-based compound. In the washing step, a large amount of waste solution including ammonium ion can be generated.

The known method is associated with considerable difficulties in preparing the cerium carbonate-based compound with desired crystalline structure, particle size or shape and requires a complicated preparation process due to the problems as described above. Therefore, the present inventors have studied continuously the method for cerium carbonate-based compound with easily controlling the crystalline structure, particle size and shape, etc. of cerium carbonate-based compound together with efficient and simple process, and completed the present invention.

According to an embodiment of the present invention, there is provided a method for preparing a cerium carbonate-based compound, the method comprising the steps of reacting Lanthanite-(Ce) about 50°C or higher to produce the cerium carbonate-based compound including cerium oxycabonate hydrate (Ce₂O(CO₃)₂ · H₂O) with an orthorhombic crystal structure, cerium hydroxycarbonate (Ce(OH) · (CO₃)) with a hexagonal crystal structure, or a mixture thereof.

By using the method, the cerium carbonate-based compound including cerium oxycabonate hydrate (Ce₂O(CO₃)₂ · H₂O) with an orthorhombic crystal structure, cerium hydroxycarbonate (Ce(OH) · (CO₃)) with a hexagonal crystal structure, or a mixture thereof, can be prepared by performing only the elevation of reacting temperature and by using Lanthanite-(Ce) as a starting material without urea.

Thus, the crystalline structure, particle size and shape, etc. of cerium carbonate-based compound can be easily controlled without excessively high reaction pressure, by regulating the reaction conditions of the temperature elevation, for examples reaction time, reaction temperature, and the like. Specifically, even if the cerium hydroxycarbonate (Ce(OH) · (CO₃)) with a hexagonal crystal structure is produced, the reaction can proceed at high temperature without concerning the high reaction pressure caused by urea pyrolysis, to produce the cerium carbonate-based compound with the regulated crystalline structure, particle size, shape and the like as desired.

In a method of an embodiment, the washing step to remove the organic by-products is not required substantially, thereby easily regulating the crystalline structure, particle size, shape and the like of the cerium carbonate-based compound and making the entire production process simpler.

As described in more detail hereinafter, when the cerium oxide is prepared by sintering the cerium carbonate-based compound obtained according to the method, at least a boundary formed on each cerium oxide particle defines two or more crystal grains in a particle, the crystal grains new crystalline property including at least a cerium oxide crystal. Therefore, the cerium oxide can be easily pulverized along the boundary, thereby making it possible to obtain cerium oxide powder with uniform and fine particle size. The uniform and fine particle size can provide the cerium oxide powder with excellent polishing property as an abrasive for CMP slurry, and simplify the pulverizing step of the cerium oxide.

Meanwhile, the method for preparing the cerium carbonate-based compound will be described in more detail as follows.

In the method for preparing the cerium carbonate-based compound, the Lanthanite-(Ce) is used as a starting material. The Lanthanite-(Ce) has the chemical formula (Ce,La)₂(CO₃)₃ · 8(H₂O), and is a kind of known cerium compounds. It is known that it can be obtained from the natural source. The cerium salts, for example cerium nitrate, used for preparing the cerium carbonate-based compound in the art is obtained by dissolving Lanthanite-(Ce) as a starting material, and performing the crystallizing step, purifying step, and the like. Therefore, the cerium salt is usually more expensive than Lanthanite-(Ce).

The cerium carbonate-based compound can be prepared directly from relatively-cheap Lanthanite-(Ce) instead of the cerium salts such as cerium nitrate, thereby preparing the cerium carbonate-based compound efficiently at low cost

As described above, the crystal structure, size or shape of the cerium carbonate-based compound can be easily controlled by reacting the starting material at the elevated temperature, and thus, the cerium oxide powder with more uniform and fine particle size.

The reaction of Lanthanite-(Ce) at elevated temperature is performed in liquid-phase medium. The water molecule contained in Lanthanite-(Ce) functions as a reaction medium due to the hydrate form of Lanthanite-(Ce). The liquid-phase medium is used for increasing the reactivity of Lanthanite-(Ce) in elevating the reaction temperature.

In addition, the liquid-phase medium can be an aqueous solvent or organic solvent, as long as they are capable of dispersing or dissolving Lanthanite-(Ce). The liquid-phase medium is not limited specifically, but its examples can be water, alcoholic solvents such as ethanol, methanol, and etc.; organic solvents such as dimethylformaldehyde(DMF) or demethylsulfoxide (DMSO), or a mixed solvent containing two or more kinds of the solvent. In an aspect of the reactivity of Lanthanite-(Ce) and easy removal of solvent after reaction, water and aqueous solvents including water can be used preferably, and the examples of aqueous solvents are a mixture of water and alcoholic solvents, DMF or DMSO.

According to an embodiment of the present invention, Lanthanite-(Ce) is reacted at about 50°C or higher to produce the cerium carbonate-based compound used for preparing cerium oxide as a precursor, such as cerium oxycabonate hydrate(Ce₂O(CO₃)₂ · H₂O) with orthorhombic crystal structure, and/or cerium hydroxycarbonate (Ce(OH) · (CO₃)) with hexagonal crystal structure. The reaction step at elevated temperature can be performed preferably about 50 to 300°C, more preferably about 50 to 250°C, or most preferably about 80 to 250°C.

If the reaction is conducted at less than about 50°C, the cerium carbonate-based compound can rarely be formed or the reaction delays excessively. On the other hand, if the reaction is conducted at excessively-high temperature, Lanthanite-(Ce) can be directly changed into cerium oxide which shows low polishing rate as an abrasive due to non-uniform and large particle even after pulverization. In the case that an aqueous solvent is used as a reaction medium at the excessively-high temperature, the reaction pressure increases additionally because of vapor pressure caused by the high temperature. Thus, the high pressure requires an expensive manufacturing apparatus and causes a dangerous problem.

In addition, the pressure of reacting Lanthanite-(Ce) at an elevated temperature is not particularly limited, but for example, can be about 1bar to 100bar, preferably about 1 to 40bar, or more preferably about 1 to 10bar. The reaction pressure means the pressure of reaction system, when the reaction at the elevated temperature initiates. As described above, urea is not used in the method of preparing the cerium carbonate-based compound according to an embodiment, and thus, the gaseous product is not formed, thereby reducing the additional increase of reaction temperature. In consideration of the reaction temperature at the point of reaction initiation, the reaction step at elevated temperature can be carried out in a high pressure reactor, if necessary.

The step of reacting Lanthanite-(Ce) can last for about 0.5 to 100 hours, preferably about 0.5 to 48 hours, or more preferably about 0.5 to 24 hours. The cerium carbonate-based compounds being applicable as a precursor of cerium oxide, such as orthorhombic cerium oxycabonate hydrate(Ce₂O(CO₃)₂ · H₂O) with orthorhombic crystal structure, hexagonal cerium hydroxycarbonate (Ce(OH) · (CO₃)), or a mixture thereof can be prepared at a good efficiency by reacting Lanthanite-(Ce) at the elevated temperature for such reaction time. Such reaction time can prevent the by-products such as cerium oxide with poor property being formed at excessively-long time.

When the reaction of Lanthanite-(Ce) at elevated temperature is conducted in liquid-phase medium, for example aqueous solvent, the weight ratio of Lanthanite-(Ce) to liquid-phase medium is about 1 : 0.5 to 1 : 20, preferably about 1 : 1 to 1 : 10, or more preferably about 1 : 1 to 1 : 5.

If the amount of liquid-phase medium is excessively small with respect to that of Lanthanite-(Ce), Lanthanite-(Ce) cannot be dissolved or dispersed sufficiently, thereby affecting negatively the reactivity. Moreover, the reaction of Lanthanite-(Ce) includes the process that the particles dissolved or dispersed in liquid-phage medium form crystals of cerium carbonate-based compound. If the liquid-phase medium is used at too small amount, the cerium carbonate-based compound with non-uniform properties can be prepared. On the other hand, if the amount of liquid-phase medium is excessively large, the productivity can be decrease adversely.

Meanwhile, in the preparing method of an embodiment, the crystal structure, crystal size, shape and the like of the cerium carbonate-based compound can be controlled easily by regulating the reaction conditions of Lanthanite-(Ce) reaction.

For examples, the production degree of the cerium carbonate-based compounds with different crystal structures such as orthorhombic cerium oxycabonate hydrate(Ce₂O(CO₃)₂ · H₂O) or hexagonal cerium hydroxycarbonate (Ce(OH) · (CO₃)) can be controlled by regulating the reaction temperature, reaction time or amount of used liquid-phase medium.

In accordance with an embodiment of the present invention, the step of reacting Lanthanite-(Ce) is conducted at a temperature of 50 to 130°C to produce the cerium carbonate-based compound comprising cerium oxycabonate hydrate(Ce₂O(CO₃)₂ · H₂O) with orthorhombic crystal structure. The production degree of orthorhombic cerium oxycabonate hydrate(Ce₂O(CO₃)₂ · H₂O) can be controlled by regulating the reaction -conditions such as reaction temperature, reaction time and the like in the temperature ranges.

For example, 50 vol% or more, or preferably 100 vol% pure of orthorhombic cerium oxycabonate hydrate(Ce₂O(CO₃)₂ · H₂O) among the produced cerium carbonate-based compounds can be prepared by reacting Lanthanite-(Ce) at about 50°C or higher to lower than 110°C. In addition, 50 vol% or more of orthorhombic cerium oxycabonate hydrate(Ce₂O(CO₃)₂ · H₂O) among the produced cerium carbonate-based compounds can be prepared by regulating the reaction time to be shorter, the weight ratio of Lanthanite-(Ce) to liquid-phase medium to be less than about 1 : 5, preferably about 1 : 0.5 or more and less than 1 : 5, namely relatively small amount of liquid-phase medium, even under the condition of about 110 to 130°C. At about 110 to 130°C, the reaction conditions such as reaction time for preparing 50 vol% or more of orthorhombic cerium oxycabonate hydrate(Ce₂O(CO₃)₂ · H₂O) can be determined properly by an ordinary skilled person in the art, considering other reaction conditions, the composition of raw material and the like

Additionally, according to an embodiment of the present invention, 50 vol% or more, or preferably 100 vol% pure of hexagonal cerium hydroxycarbonate (Ce(OH) · (CO₃)) among the produced cerium carbonate-based compounds can be prepared by reacting Lanthanite-(Ce) at about 110 to 300°C, or preferably about 110 to 250°C. In addition, The production degree of hexagonal cerium hydroxycarbonate (Ce(OH) · (CO₃)) can be controlled by regulating the reactions conditions such as reaction temperature, reaction time and the like in the temperature ranges.

For example, 50 vol% or more, or preferably 100 vol% pure of hexagonal cerium hydroxycarbonate (Ce(OH) · (CO₃)) among the produced cerium carbonate-based compounds can be prepared by reacting Lanthanite-(Ce) at about higher than 130 to 300°C or lower, preferably about higher than 130 to 250°C or lower. In addition, 50 vol% or more of hexagonal cerium hydroxycarbonate (Ce(OH) · (CO₃)) among the produced cerium carbonate-based compounds can be prepared by regulating the reaction time to be longer, the weight ratio of Lanthanite-(Ce) to liquid-phase medium to be about 1 : 5 or more, or preferably about 1 : 5 to 1 : 20, namely relatively large amount of liquid-phase medium, even under the condition of about 110 to 130°C.

According to the same or similar method to the aforementioned method, the cerium carbonate-based compounds with desired crystal structure, size, shape and the like can be obtained by regulating the reaction conditions and thus can be used for producing the cerium oxide having desired physiochemical properties, shape, size and the like.

No use of urea in the preparing method of the present invention can reduce the additional increase of the reaction pressure, thereby easily preparing the cerium carbonate-based compounds with desired crystal structure, size, shape and the like. In addition, because the cerium carbonate-based compounds can be prepared by only using Lanthanite-(Ce) without urea, such method reduces greatly the production of by-products, waste water, or waste solutions and removes the need of the additional washing step. As a result, the process of preparing cerium carbonate-based compounds useful for producing the cerium oxide as a precursor becomes greatly simple and efficient.

A cerium carbonate-based compound can be prepared by the aforementioned method. The cerium carbonate-based compound does not contain by-product remnants substantially and has desired crystal structure, size, shape and the like, because it is prepared by only using Lanthanite-(Ce).

For example, the cerium carbonate-based compounds can include 50 vol% or more of orthorhombic cerium oxycabonate hydrate(Ce₂O(CO₃)₂ · H₂O) or hexagonal cerium hydroxycarbonate (Ce(OH) · (CO₃)) with respect to the whole product. The regulation of the reaction conditions in the production process can make the cerium carbonate-based compounds contain orthorhombic compound or hexagonal compound at a desired amount or size.

Thus, the cerium oxide with desired physiochemical properties, shape and etc. can be produced by using the cerium carbonate-based compounds and then can be used suitably for an abrasive of CMP slurry.

In an embodiment of the present invention, there is provided a method for preparing cerium oxide comprising the steps of producing the cerium carbonate-based compound according to the aforementioned method, and sintering the cerium carbonate-based compound.

The method of preparing the cerium carbonate-based compound is the same as the method described above, and the sintering temperature and method of cerium carbonate-based compound follows those of preparing the cerium oxide which has been known to an ordinarily-skilled person in the art. For examples, the sintering temperature may be regulated in the ranges of about 300 to 1500°C, preferably about 400 to 1000°C, or more preferably about 700 to 950°C. The sintering can be performed for about 30 minutes to 4 hours. If the sintering temperature is excessively low and sintering time is short, the crystallinity of cerium oxide can be decreased. In case that the cerium oxide with low crystallinity can be used for an abrasive of CMP slurry, it cannot show the proper polishing performance. On the other hand, if the sintering temperature is excessively high or the sintering time is longer, the produced cerium oxide has too high crystallintiy and thus may make a scratch on polishing surface.

The sintering step can be conducted with rotary kiln, box furnace, etc.

According to the method for preparing the cerium oxide, because the cerium oxide is prepared after preparing the cerium carbonate-based compounds with desired crystal structure, size, shape and the like, the cerium oxide can have a controlled physiochemical properties and shape. Thus, the desired properties of the cerium oxide can be controlled to show proper polishing property of an abrasive of CMP slurry. For example, the cerium oxide prepared from orthorhombic cerium oxycabonate hydrate(Ce₂O(CO₃)₂ · H₂O) as a main precursor can have advantageous property for polishing silicon nitride film with high strength as an abrasive of CMP slurry. On the other hand, the cerium oxide prepared from hexagonal cerium hydroxycarbonate (Ce(OH) · (CO₃)) as a main precursor can have low polishing rate on silicon nitride film but high polishing rate on silicon oxide film, and thus show high selectivity to two films.

The cerium oxide obtained by the aforementioned method shows new crystallinity. It includes more than one cerium oxide particles where two or more crystal grains defined by at least a boundary are formed on each particle, and each crystal grain includes at least a cerium oxide crystal. In the cerium oxide particle obtained by conventional preparation method, the boundary and the crystal grain defined by the boundary cannot be observed, which is clearly differentiated from the cerium oxide of the present invention.

In accordance with the present disclosure, there is provided a crystalline cerium oxide comprising two or more cerium oxide particles where two or more crystal grains defined by at least a boundary are formed on each particle, and each crystal grain includes at least a cerium oxide crystal.

Herein, the term, cerium oxide crystal means a solid-phase complete unit that the component(s) composing the cerium oxide have regularly repeated structures in three-dimensions. The crystal can be defined by specific X-ray diffraction analysis, as known to an ordinarily-skilled person in the art.

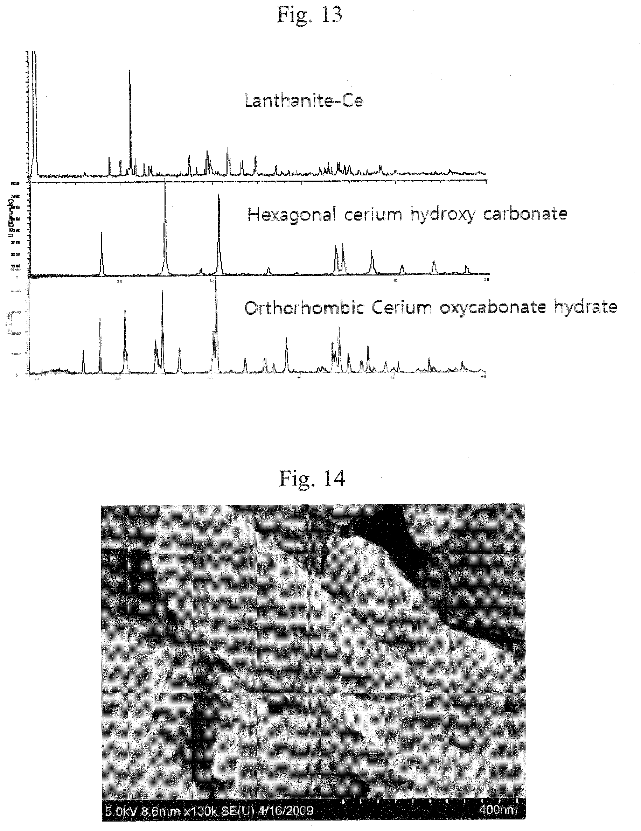

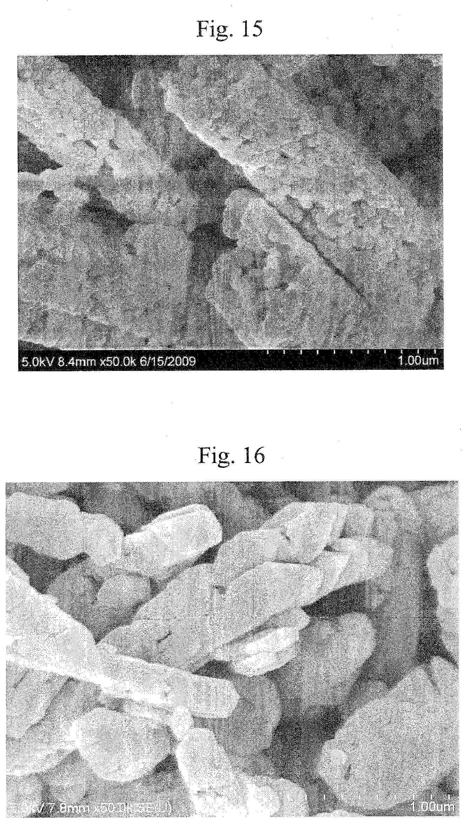

The term, crystal grain means a microunit which composes a particle of cerium oxide and comprises at least a cerium oxide crystal. That is, each crystal grain can be defined by a boundary formed on or inside the cerium oxide particle. The crystal grain and the boundary on cerium oxide particle can be observed by SEM photograph of the particle, which was confirmed by Figs. 14 or 15.

Namely, in the crystalline cerium oxide of an embodiment of the present disclosure, at least a boundary formed on each cerium oxide particle defines two or more crystal grains, and thus the cerium oxide can be pulverized easily along the boundary, resulting in obtaining cerium oxide powder with more uniform and fine diameter. The cerium oxide powder can show better polishing property as an abrasive of CMP slurry due to its uniform and fine diameter. In addition, the pulverizing step of the cerium oxide can become simpler.

Because the boundary formed on the cerium oxide particle, and the crystal grain defined by the boundary are in the cerium oxide, the crystalline cerium oxide represents proper hardness. Thus, when the crystalline cerium oxide is used as an abrasive of CMP slurry, it shows excellent polishing rate. In particular, the crystalline cerium oxide has an excellent polishing property compared to the conventional cerium oxide. Moreover, the crystalline cerium shows better polishing property, such as polishing rate than that of the cerium oxide which is prepared directly from Lanthanite-(Ce) without passing though the cerium carbonate-based compound.

Meanwhile, the size of crystal grain defined on the cerium oxide particle in the crystalline cerium oxide is about 20 to 300nm, preferably about 40 to 200nm, or more preferably about 50 to 200nm. The size of cerium oxide crystal included in the crystal grain can be about 10 to 300nm, preferably about 40 to 200nm, or more preferably about 40 to 100nm. More specifically, in the cerium oxide prepared from orthorhombic cerium oxycabonate hydrate, the size of crystal grain is about 50 to 130nm. In the cerium oxide prepared from hexagonal cerium hydroxycarbonate, the size of crystal grain can be about 60 to 200nm. The crystalline cerium oxide can be pulverized to produce cerium oxide powder having more uniform and fine particle size, and the power can be used for an abrasive of CMP slurry to achieve an excellent polishing property.

For example, the crystalline cerium oxide can have an average volumetric diameter of about 0.5 to 5*µ*m, preferably about 0.5 to 3*µ*m, with the proviso that it is dispersed in an aqueous solvent. Because the crystalline cerium oxide has the average volumetric diameter before performing the pulverizing step, it is possible to obtain the cerium oxide powder with uniform particle size by a simple milling process.

Meanwhile, according to an embodiment of the present disclosure, a CMP slurry including the crystalline cerium oxide powder as an abrasive can be provided. The CMP slurry can contain the powder of crystalline cerium oxide which is obtained by further pulverizing, and the powder can have uniform and fine particle size, resulting in obtaining the CMP slurry with excellent polishing property.

The CMP slurry of the present disclosure can be obtained by dispersing the above-described cerium oxide powder as an abrasive and a dispersant in solvent. Specifically, the CMP slurry can contain the abrasive and polymer dispersant dispersed in an aqueous solution.

Said dispersant may be a non-ionic polymer dispersant or anionic polymer dispersant. The non-ionic polymer dispersant can be one or more selected from the group consisting of polyvinyl alcohol (PAA), ethylene glycol (EG), glycerin, polyethylene glycol (PEG), polypropylene glycol (PPG) and polyvinyl pyrrolidone (PVP), and the anionic polymer dispersant can be one or more selected from the group consisting of polyacrylic acid, ammonium polyacrylate and polyacrylic maleic acid.

The dispersant can be used in amounts of about 0.001-10 parts by weight, and preferably about 0.02-3.0 parts by weight, based on 100 parts by weight of an abrasive containing cerium oxide powder. If the dispersant is used excessively in a small amount, rapid precipitation will occur due to low dispersibility, so that the abrasive cannot be supplied uniformly due to the precipitation occurring during transport of the abrasive slurry. On the other hand, if the dispersant is used in a large amount excessively, a dispersant polymer layer functioning as a cushioning layer may be formed thick around the abrasive particles, thereby making it difficult to allow the surface of the abrasive to be brought into contact with a polishing surface of silica, resulting in a drop in the polishing rate.

In a preferred embodiment, the CMP slurry is obtained by mixing cerium oxide powder with a dispersant in solvent and adjusting the pH of the mixture to pH 6-8. For the pH adjustment, 1N KOH or 1N HNO₃ may be used.

Alternatively, the abrasive contained in a CMP slurry can include pulverized powder of crystalline cerium oxide. The pulverizing step may be performed using dispersion system APEX mill (Kotobuki eng. & mfg. Co., Japan) or ZRS mill(Netzsch) which have been widely known in the art.

The pulverizing step can be carried out for the abrasive dispersed in the aqueous solvent, or under the condition of the zirconia beads having a size of about 0.01 to 1mm, or preferably about 0.1 to 0.6mm.

The pulverizing step can be conducted under the general condition that may be determined by considering the volume of the used mill apparatus, the input speed of abrasive, and bead agitation speed, etc. For example, in case of APEX mill with 10L volume, the pulverizing step can be performed under the condition of 1000 to 5000ml/min of dispersed solution input speed, and 300 to 800rpm of bead agitation speed. The pulverizing step using ZRS mill can be performed under the condition of 5,000 to 17,000ml/min of dispersed solution input speed, and 400 to 1,500rpm of bead agitation speed. The abrasive including the cerium oxide powder with uniform and fine particle size, and the CMP slurry containing the abrasive can be obtained by only performing the simple milling process under the general conditions.

### Technical Effect

The present invention relates to a method for preparing cerium carbonate-based compound, which is capable of easily controlling the crystalline structure, size, shape, or etc. of the cerium carbonate-based compound, and of preparing the cerium carbonate-based compound efficiently at low cost. The cerium oxide and cerium oxide powder with more uniform and fine particle and desired properties and shape can be easily prepared by using the cerium carbonate-based compound obtained according to the method, and the pulverizing step for producing the cerium oxide powder is highly simplified.

The cerium oxide powder shows the desired properties for target usages, such as excellent polishing property of an abrasive for CMP slurry, and may be used properly.

### BRIEF DESCRIPTION OF DRAWINGS

Figs. 1 to 12 are SEM photographs of cerium carbonate-based compounds prepared in Examples 1 to 12.
Fig. 13 shows XRD analysis results of cerium carbonate-based compound prepared in Examples 1 to 12.
Figs. 14 to 16 are SEM photograph of cerium oxides prepared in Examples 23, 16, and Comparative Example 2.
Fig. 17 shows XRD analysis result of cerium oxide prepared in Examples 13-23

### EXAMPLES

The invention is further explained in more detail with reference to the following examples.

### <Preparation of Cerium carbonate-based compounds>

### EXAMPLE 1

Lanthanite-(Ce) was dispersed in distilled water at 1atm and room temperature. The dispersed solution was put into the reactor, and the reactor temperature was elevated with agitation. The temperature was maintained for a predetermined period after reaching the target temperature, and then the reaction was quenched by cooling. Then, the product was dried to obtain cerium carbonate-based compound. In the process for preparing the cerium carbonate-based compound, the reaction temperature, time, and the used amount of Lanthanite-(Ce) and distilled water were as summarized in Table 1.

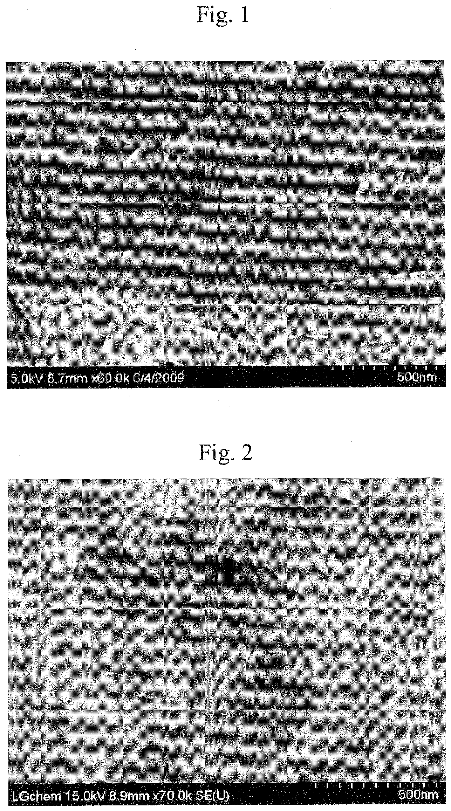

The SEM photograph of the produced cerium carbonate-based compound was shown in Fig. 1, and XRD analysis result was shown in Fig. 13. As a result of Fig. 13, the produced compound was cerium oxycabonate hydrate(Ce₂O(CO₃)₂ · H₂O) with orthorhombic crystal structure.

### EXAMPLES 2 to 12

As shown in Table 1, Examples 2-12 were performed to produce cerium carbonate-based compounds, according to the substantially same method of Example 1, except for the conditions of the reaction temperature, time, and the used amount of Lanthanite-(Ce) and distilled water summarized in Table 1.

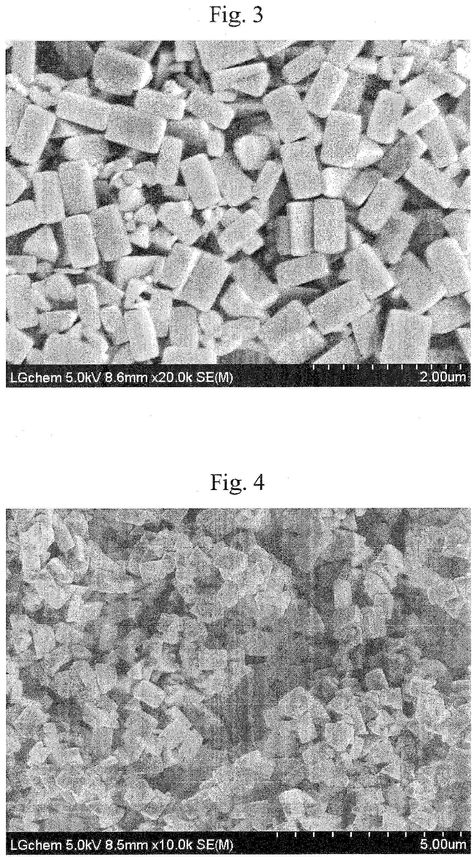

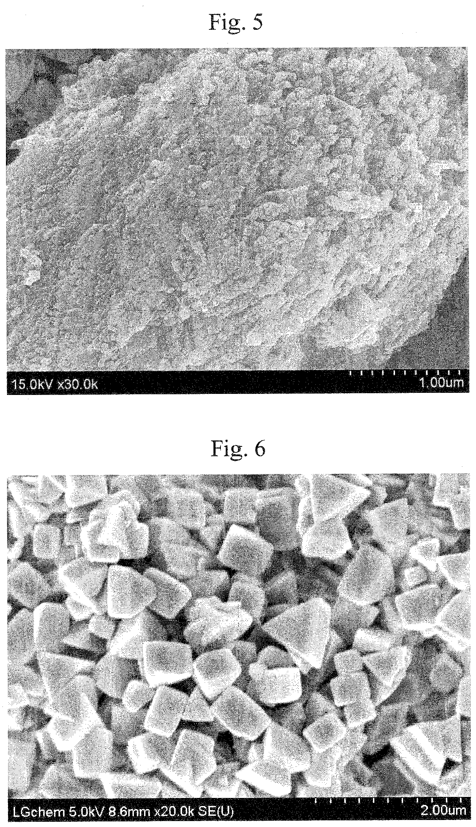

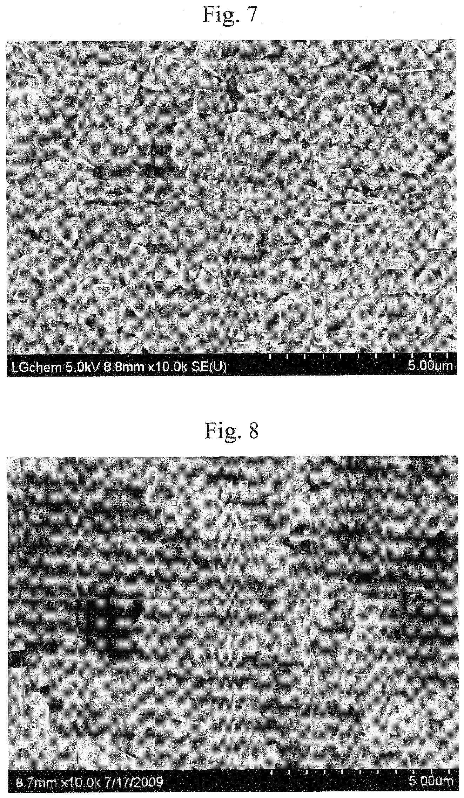

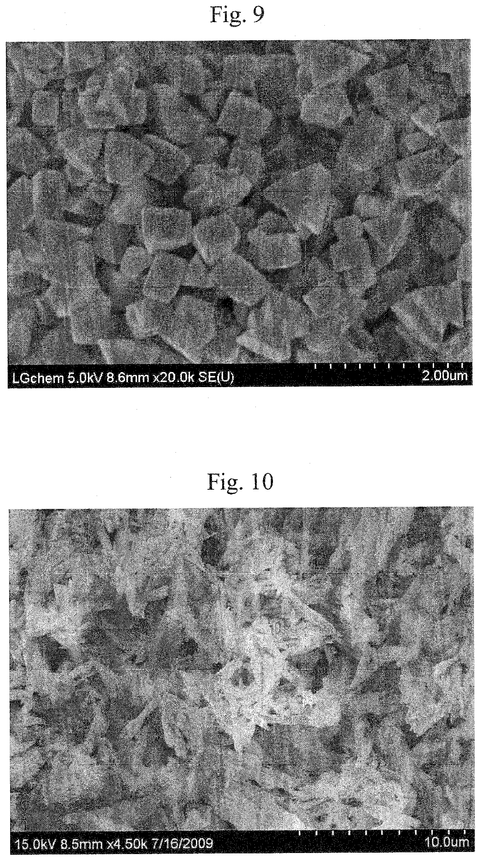

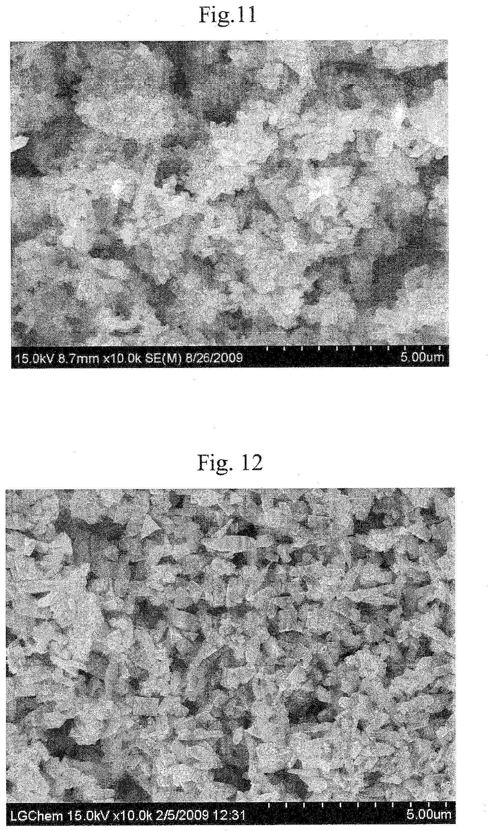

The SEM photographs of the produced cerium carbonate-based compounds were shown in Figs. 2-12, and XRD analysis result was shown in Fig. 13. Based on the result of Fig. 13, the produced compounds were identified as cerium oxycabonate hydrate(Ce₂O(CO₃)₂ · H₂O) with orthorhombic crystal structure, cerium hydroxycarbonate (Ce(OH) · (CO₃)) with a hexagonal crystal struc, or a mixture thereof, and summarized in Table 1.

### COMPARATIVE EXAMPLE 1

Cerium nitrate and urea were dissolved to obtain to 3 mol/L of cerium oxide and 9 mol/L of urea, respectively, mixed together, and then reacted at 180°C for 2 hours. When the internal pressure increased to 40bar or higher, the pressure discharged automatically, thereby maintaining 40 bar of internal pressure. If discharging the internal pressure automatically, it was confirmed that 90 bar or higher was dangerous. After the reaction termination, the reaction temperature decreased and the internal pressure was discharged to 1 bar.

The product was taken out, centrifuged to sediment the slurry and then the mother liquor was removed. The obtained slurry was dispersed with addition of the distilled water at the same amount of removed mother liquor, and centrifuged to sediment the slurry and to remove the washing solution. The washing step was performed repetitively, so as to reach 1 ms or lower of ion conductivity. After the washing step was completed, the product was dried at 60°C to obtain the cerium carbonate-based compound.

**[Table 1]**

| Example No. | Amount of starting material | Amount of distilled water | Reaction Temperature | Reaction hours | Crystallinity (volume ratio) |
|---|---|---|---|---|---|
| EXAMPLE 1 | 1 | 5 | 100°C | 12hr | Orthorhombic (100 vol%) |
| EXAMPLE 2 | 3 | 5 | 100°C | 12hr | Orthorhombic (100 vol%) |
| EXAMPLE 3 | 1 | 5 | 150°C | 6hr | Hexagonal (100 vol%) |
| EXAMPLE 4 | 1 | 5 | 180°C | 6hr | Hexagonal (100 vo%) |
| EXAMPLE 5 | 1 | 5 | 230°C | 2hr | Hexagonal (100 vol%) |
| EXAMPLE 6 | 1 | 5 | 250°C | 4hr | Hexagonal (100 vol%) |
| EXAMPLE 7 | 2 | 5 | 180°C | 6hr | Hexagonal (100 vol%) |
| EXAMPLE 8 | 3 | 5 | 180°C | 6hr | Hexagonal (100 vol%) |
| EXAMPLE 9 | 5 | 5 | 180°C | 6hr | Hexagonal (100 vol%) |
| EXAMPLE 10 | 4 | 5 | 80°C | 15hr | Orthorhombic (100 vol%) |
| EXAMPLE 11 | 4 | 5 | 150°C | 30min | Hexagonal (100 vol%) |
| EXAMPLE 12 | 4 | 5 | 130°C | 3hr | orthorhombic/he xagonal(Volume ratio = 1/2) |

Referring to Examples 1 to 12, the cerium carbonate-based compounds used for preparing cerium oxide as a precursor could be easily prepared from Lanthanite-(Ce). Particularly, the crystal structure and shape of cerium carbonate-based compound could be easily controlled by regulating the conditions of the reaction temperature, time, and the used amount of Lanthanite-(Ce) and distilled, which was confirmed by Figs 1 to 12.

In addition, Comparative Example 1 required additional washing step to remove waste solution which was caused by using urea, and performed at elevated reaction temperature. However, Examples 1 to 12 did not require such washing step and dispelled the concerns on the elevation of reaction pressure..

### <Preparation of Cerium Oxide>

### EXAMPLES 13 to 23

The cerium carbonate-based compounds obtained in Examples 1-12 were
calcinated in Continuous Type Furnace under the conditions in Table 2 to produce cerium oxide.

The SEM photographs of cerium oxide obtained in Examples 23 and 16 were represented in Figs. 14 and 15. The SEM photographs confirmed that the cerium oxide powder included one more than cerium oxide particles on which the boundary defining two or more crystal grains was formed.

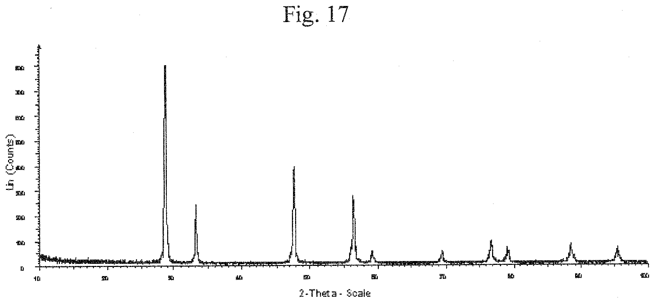

The cerium oxides obtained from the Examples were analyzed with XRD. The result confirmed that the cerium carbonate-based compound was transferred to cerium oxide, as shown in the XRD pattern of Fig. 17. The SEM photograph and XRD pattern confirmed that the cerium oxide showed the crystallinity and each crystal grain included at least one cerium oxide crystal.

The sizes of the crystal and crystal grain were measured by the following methods and written in Table 2.

The crystal size of cerium oxide was determined by XRD analysis using the Rietveld Method, and the crystal grain size was determined by measuring the maximal length of crystal grain defined by boundary formed on particle on the basis of the SEM image.

### Comparative Example 2

The cerium oxide was prepared by conducting the heat-treatment the cerium carbonate-based compound obtained in Comparative Example 1 at 900°C in Continuous Type Furnace.

The produced cerium oxide was analyzed with XRD. As shown in Fig. 17, it confirmed that the cerium carbonate-based compound was changed to crystalline cerium oxide.

The SEM image of the cerium oxide in Comparative Example 2 was shown in Fig. 16. This result confirmed that the boundary was rarely formed on the particle of cerium oxide obtained in Comparative Example 2 and the crystal grain defined by the boundary was hardly observed.

**[Table 2]**

| | Kind of Cerium carbonate-based compound (EXAMPLE NO) | Input amount | Sintering Temperature | Crystal size | Crystal grain size |
|---|---|---|---|---|---|
| EXAMPLE 13 | Orthorhombic (EXAMPLE 1) | 7kg/hr | 800°C | 51nm | about 60-80nm |
| EXAMPLE 14 | Orthorhombic (EXAMPLE 1) | 7kg/hr | 825°C | 53nm | about 55-75nm |
| EXAMPLE 15 | Orthorhombic (EXAMPLE 1) | 7kg/hr | 850°C | 64nm | about 65-9nm |
| EXAMPLE 16 | Orthorhombic (EXAMPLE 1) | 7kg/hr | 900°C | 70nm | about 70-100nm |
| EXAMPLE 17 | Orthorhombic (EXAMPLE 1) | 7kg/hr | 925°C | 75nm | about 80-125nm |
| EXAMPLE 18 | Orthorhombic (EXAMPLE 2) | 7kg/hr | 850°C | 58nm | about 100-130nm |
| EXAMPLE 19 | Orthorhombic (EXAMPLE 2) | 5kg/hr | 850°C | 61nm | about 65-80nm |
| EXAMPLE 20 | Hexagonal (EXAMPLE 3) | 7kg/hr | 900°C | 50nm | about 100-140nm |
| EXAMPLE 21 | Hexagonal (EXAMPLE 3) | 7kg/hr | 850°C | 47nm | about 90-130mn |
| EXAMPLE 22 | Hexagonal (EXAMPLE 3) | 7kg/hr | 800°C | 42nm | about 65-100nm |
| EXAMPLE 23 | Hexagonal (EXAMPLE 4) | 7kg/hr | 900°C | 48nm | about 180-200nm |

Referring to Table 2 and Figs 14 to 15, when the cerium oxides were prepared by using the cerium carbonate-based compound with different properties such as crystal structure, shape, size, kind, and the like, such properties of the cerium carbonate-based compound was reflected on the produced cerium oxide, thereby be capable of making the cerium oxide with the different properties such as various shape, size, and the like.

It was confirmed that while on the cerium oxide particle obtained in the Examples, the boundary and two or more crystal grains defined the boundary were formed, the boundary and the crystal grain were rarely formed on the cerium oxide particle obtained in the Comparative Example. In addition, the crystal grain size of cerium oxide prepared from orthorhombic cerium oxycabonate was about 50 to 130nm, and that prepared from hexagonal cerium hydroxycarbonate was about 60 to 200nm.

### <Preparation of CMP slurry and Evaluation of polishing performance >

### EXAMPLE 24

100 g of each cerium oxide powder prepared in the Examples 14-17, and 20, 2 wt% of a dispersant (LG Chem Ltd.) based on the cerium oxide, and 900g of water were mixed and dispersed by pulverizing to desired particle size with bead-mill to prepare CMP slurry.

In the pulverizing process, primary pulverization was conducted by using vertical type mill (APEX mill, Nippon Kotobuki, 0.3mm bead, 300 to 800 RPM of angular velocity (2 to 7m/s of linear velocity) at central part, 1 to 5 L/min of input speed) to reach 1 µm size, and then the secondary pulverization was performed by using horizontal mill (ZRS10 mill, German Netzsc, 0.1mm bead, 500 to 1300 RPM of angular velocity (5 to 13 m/s of liner velocity) at central part).

The volumetric average diameter of cerium dioxide in the CMP slurry obtained with pulverization was measured and represented in Table 3. The particle size distribution by using the LA910 manufactured by Horiba confirmed t the volumetric average diameter.

### EXAMPLE 25 to 28

The CMP slurries with 10% of solid content, which were produced by using each cerium oxide powder prepared in the Examples 14-17, were added by 1000g of water and an additive to obtain CMP slurries with 5% of solid content. The polishing performance of the CMP slurries were evaluated in POLI 500 Polisher and presented in Table 3.

### COMPARATIVE EXAMPLE 3

The Lathanite-(Ce) was sintered directly without reacting Lathanite-(Ce) additionally, according to the substantially same method of Example 15 to obtain cerium oxide. The CMP slurry was prepared by using the obtained cerium oxide according to the same method of Examples 24-25, and the polishing performance was evaluated according to the same method of Example 25. The result was presented in Table 3.

**[Table 3]**

| | cerium oxide (EXAMPLE No.) | Average particle diameter | Polishing result |
|---|---|---|---|
| EXAMPLE 25 | EXAMPLE 14 | 86nm | 4594Å/min |
| EXAMPLE 26 | EXAMPLE 15 | 86nm | 4772Å/min |
| EXAMPLE 27 | EXAMPLE 16 | 86nm | 4710Å/min |
| EXAMPLE 28 | EXAMPLE 17 | 86nm | 4965Å/min |
| COMPARATIVE EXAMPLE 3 | The cerium oxide was prepared directly from Lathanite-Ce | 86nm | 4330Å/min |

Referring to Table 3, it was confirmed that the CMP slurries of Examples 25 to 28 showed better polishing performance than that of Comparative Example 3, even though the cerium oxide powder with the same particle size were used in Examples and Comparative Example.

The reason is that the cerium oxide powder used in Examples 25 to 28 has more uniform size, which was confirmed by the particle distribution result. That is, because the boundary and two or more crystal grains were formed on particle cerium oxide powder used in Examples 25 to 28, the cerium oxide crystal was pulverized uniformly along the boundary, even at the same pulverizing conditions.

On the other hand, the cerium oxide prepared directly from Lanthanite-(Ce) in Comparative Example 3, the particle distribution of the cerium oxide powder obtained after pulverizing step showed non-uniform particle distribution, resulting in the poor polishing performance of the CMP slurry.

## Claims

1. The method for preparing cerium carbonate-based compound comprising the step of reacting Lanthanite-(Ce) which has chemical formula of (Ce,La)₂(CO₃)₃·8(H₂O) at 50°C or higher to produce cerium oxycarbonate hydrate (Ce₂O(CO₃)₂ · H₂O) with orthorhombic crystal structure, cerium hydroxycarbonate (Ce(OH) · (CO₃)) with hexagonal crystal structure, or a mixture thereof, wherein the step of reacting Lanthanite-(Ce) is conducted in liquid-phase medium.

2. The method for preparing cerium carbonate-based compound of Claim 1, wherein the liquid-phase medium comprises at least a solvent selected from the group consisting of water, ethanol, methanol, dimethylformamide (DMF) and dimethylsulfoxide (DMSO).

3. The method for preparing cerium carbonate-based compound of Claim 2, wherein the step of reacting Lanthanite-(Ce) is conducted by using Lanthanite-(Ce) dispersed in an aqueous solvent.

4. The method for preparing cerium carbonate-based compound of Claim 1, wherein the step of reacting Lanthanite-(Ce) is conducted at a temperature of 50 to 300°C.

5. The method for preparing cerium carbonate-based compound of Claim 1, wherein the step of reacting Lanthanite-(Ce) initiates at 1 to 100bar.

6. The method for preparing cerium carbonate-based compound of Claim 1, wherein the step of reacting Lanthanite-(Ce) is conducted for 0.5 to 100 hours.

7. The method for preparing cerium carbonate-based compound of Claim 1, wherein the step of reacting Lanthanite-(Ce) is conducted in liquid-phase medium under the condition that the mixing ratio of Lanthanite-(Ce) to the liquid-phase medium is 1 : 0.5 to 1 : 20 by weight.

8. The method for preparing cerium carbonate-based compound of Claim 1, wherein the step of reacting Lanthanite-(Ce) is conducted at a temperature of 50 to 130°C to produce the cerium carbonate-based compound comprising cerium oxycabonate hydrate (Ce₂O(CO₃)₂ · H₂O) with orthorhombic crystal structure.

9. The method for preparing cerium carbonate-based compound of Claim 1, wherein the step of reacting Lanthanite-(Ce) is conducted at a temperature of 110 to 300°C to produce the cerium carbonate-based compound comprising cerium hydroxycarbonate (Ce(OH)•(CO₃)) with hexagonal crystal structure.

10. The method for preparing cerium carbonate-based compound of Claim 1, wherein the step of reacting Lanthanite-(Ce) is conducted at a temperature of 50°C or higher to lower than 110°C, to produce the cerium carbonate-based compound comprising 50 vol% or more of cerium oxycabonate hydrate (Ce₂O(CO₃)₂ · H₂O) with orthorhombic crystal structure.

11. The method for preparing cerium carbonate-based compound of Claim 1, wherein the step of reacting Lanthanite-(Ce) is conducted at a temperature of higher than 130 °C to 300°C or lower, to produce the cerium carbonate-based compound comprising 50 vol% or more of cerium hydroxycarbonate (Ce(OH)•(CO₃)) with hexagonal crystal structure.

12. A method for preparing cerium oxide comprising the steps of producing the cerium carbonate-based compound according to the method of any one according to Claim 1, and sintering the cerium carbonate-based compound.

13. The method for preparing cerium oxide of Claim 12, wherein the step of sintering is performed at a temperature of 300 to 1,500°C.

## Patentansprüche

1. Verfahren zum Herstellen einer Cercarbonat-basierten Verbindung, umfassend den Schritt, bei dem Lanthanit-(Ce), das die chemische Formel von (Ce,La)₂(CO₃)₃·8(H₂O) aufweist, bei 50°C oder höher reagieren gelassen wird, so dass Ceroxycarbonat-Hydrat (Ce₂O(CO₃)₂·H₂O) mit orthorhombischer Kristallstruktur, Cerhydroxycarbonat (Ce(OH)·(CO₃)) mit hexagonaler Kristallstruktur oder eine Mischung davon gebildet wird, wobei der Schritt des Reagierenlassens von Lanthanit-(Ce) in einem Flüssigphasenmedium durchgeführt wird.

2. Verfahren zum Herstellen einer Cercarbonat-basierten Verbindung gemäß Anspruch 1, wobei das Flüssigphasenedium wenigstens ein Lösungsmittel umfasst, das ausgewählt ist aus der Gruppe, bestehend aus Wasser, Ethanol, Methanol, Dimethylformamid (DMF) und Dimethylsulfoxid (DMSO).

3. Verfahren zum Herstellen einer Cercarbonat-basierten Verbindung gemäß Anspruch 2, wobei der Schritt des Reagierenlassens von Lanthanit-(Ce) unter Verwendung von in einem wässrigen Lösungsmittel dispergierten Lanthanit-(Ce) durchgeführt wird.

4. Verfahren zum Herstellen einer Cercarbonat-basierten Verbindung gemäß Anspruch 1, wobei der Schritt des Reagierenlassens von Lanthanit-(Ce) bei einer Temperatur von 50 bis 300°C durchgeführt wird.

5. Verfahren zum Herstellen einer Cercarbonat-basierten Verbindung gemäß Anspruch 1, wobei der Schritt des Reagierenlassens von Lanthanit-(Ce) bei 1 bis 100 bar initiiert wird.

6. Verfahren zum Herstellen einer Cercarbonat-basierten Verbindung gemäß Anspruch 1, wobei der Schritt des Reagierenlassens von Lanthanit-(Ce) während 0,5 bis 100 Stunden durchgeführt wird.

7. Verfahren zum Herstellen einer Cercarbonat-basierten Verbindung gemäß Anspruch 1, wobei der Schritt des Regierenlassens von Lanthanit-(Ce) in einem Flüssigphasenmedium unter der Bedingung durchgeführt wird, dass das Mischungsverhältnis von Lanthanit-(Ce) zu dem Flüssigphasenmedium 1:0,5 bis 1:20 nach Gewicht beträgt.

8. Verfahren zum Herstellen einer Cercarbonat-basierten Verbindung gemäß Anspruch 1, wobei der Schritt des Reagierenlassens von Lanthanit-(Ce) bei einer Temperatur von 50 bis 130°C durchgeführt wird, so dass die Cercarbonat-basierte Verbindung, die Ceroxycarbonat-Hydrat (Ce₂O(CO₃)₂·H₂O) mit orthorhombischer Kristallstruktur umfasst, gebildet wird.

9. Verfahren zum Herstellen einer Cercarbonat-basierten Verbindung gemäß Anspruch 1, wobei der Schritt des Reagierenlassens von Lanthanit-(Ce) bei einer Temperatur von 110 bis 300°C durchgeführt wird, so dass die Cercarbonat-basierte Verbindung, die Cerhydroxycarbonat (Ce(OH)·(CO₃)) mit hexagonaler Kristallstruktur umfasst, gebildet wird.

10. Verfahren zum Herstellen einer Cercarbonat-basierten Verbindung gemäß Anspruch 1, wobei der Schritt des Reagierenlassens von Lanthanit-(Ce) bei einer Temperatur von 50 oder höher bis tiefer als 110°C durchgeführt wird, so dass die Cercarbonat-basierte Verbindung, die 50 Vol.% oder mehr an Ceroxycarbonat-Hydrat (Ce₂O(CO₃)₂·H₂O) mit orthorhombischer Kristallstruktur umfasst, gebildet wird.

11. Verfahren zum Herstellen einer Cercarbonat-basierten Verbindung gemäß Anspruch 1, wobei der Schritt des Reagierenlassens von Lanthanit-(Ce) bei einer Temperatur von höher als 130°C bis 300°C oder tiefer durchgeführt wird, so dass die Cercarbonat-basierte Verbindung, die 50 Vol.% oder mehr an Cerhydroxycarbonat (Ce(OH)·CO₃)) mit hexagonaler Kristallstruktur umfasst, gebildet wird.

12. Verfahren zum Herstellen von Ceroxid, umfassend die Schritte des Herstellens der Cercarbonat-basierten Verbindung nach einem Verfahren gemäß Ansprüch 1 und des Sinterns der Cercarbonat-basierten Verbindung.

13. Verfahren zum Herstellen von Ceroxid gemäß Anspruch 12, wobei der Schritt des Sinterns bei einer Temperatur von 300 bis 1.500°C durchgeführt wird.

## Revendications

1. Procédé de préparation d'un composé à base de carbonate de cérium comprenant l'étape de réaction de la Lanthanite-(Ce) qui a la formule chimique (Ce,La)₂(CO₃)₃·8(H₂O) à 50 °C ou plus pour produire un hydrate d'oxycarbonate de cérium (Ce₂O(CO₃)₂ · H₂O) ayant une structure cristalline orthorhombique, d'hydrocarbonate de cérium (Ce(OH) · (CO₃)) ayant une structure cristalline hexagonale, ou un mélange de ceux-ci, dans lequel l'étape de réaction de la Lanthanite-(Ce) est réalisée dans un milieu en phase liquide.

2. Procédé de préparation d'un composé à base de carbonate de cérium selon la revendication 1, dans lequel le milieu en phase liquide comprend au moins un solvant sélectionné dans le groupe constitué d'eau, d'éthanol, de méthanol, de diméthylformamide (DMF) et de diméthylsulfoxide (DMSO).

3. Procédé de préparation d'un composé à base de carbonate de cérium selon la revendication 2, dans lequel l'étape de réaction de la Lanthanite-(Ce) est réalisée en utilisant de la Lanthanite-(Ce) dispersée dans un solvant aqueux.

4. Procédé de préparation d'un composé à base de carbonate de cérium selon la revendication 1, dans lequel l'étape de réaction de la Lanthanite-(Ce) est réalisée à une température de 50 à 300°C.

5. Procédé de préparation d'un composé à base de carbonate de cérium selon la revendication 1, dans lequel l'étape de réaction de la Lanthanite-(Ce) commence à 1 à 100 bar.

6. Procédé de préparation d'un composé à base de carbonate de cérium selon la revendication 1, dans lequel l'étape de réaction de la Lanthanite-(Ce) est réalisée pendant 0,5 à 100 heures.

7. Procédé de préparation d'un composé à base de carbonate de cérium selon la revendication 1, dans lequel l'étape de réaction de la Lanthanite-(Ce) est réalisée dans un milieu en phase liquide sous la condition que le rapport de mélange de la Lanthanite-(Ce) sur le milieu en phase liquide soit de 1 : 0,5 à 1 : 20 en poids.

8. Procédé de préparation d'un composé à base de carbonate de cérium selon la revendication 1, dans lequel l'étape de réaction de la Lanthanite-(Ce) est réalisée à une température de 50 à 130 °C pour produire le composé à base de carbonate de cérium comprenant un hydrate d'oxycarbonate de cérium (Ce₂O(CO₃)₂ · H₂O) ayant une structure cristalline orthorhombique.

9. Procédé de préparation d'un composé à base de carbonate de cérium selon la revendication 1, dans lequel l'étape de réaction de la Lanthanite-(Ce) est réalisée à une température de 110 à 300 °C pour produire le composé à base de carbonate de cérium comprenant de l'hydroxycarbonate de cérium (Ce(OH)•(CO₃)) ayant une structure cristalline hexagonale.

10. Procédé de préparation d'un composé à base de carbonate de cérium selon la revendication 1, dans lequel l'étape de réaction de la Lanthanite-(Ce) est réalisée à une température de 50 °C ou plus à moins de 110 °C, pour produire le composé à base de carbonate de cérium comprenant 50 % en volume ou plus d'un hydrate d'oxycarbonate de cérium (Ce₂O(CO₃)₂ · H₂O) ayant une structure cristalline orthorhombique.

11. Procédé de préparation d'un composé à base de carbonate de cérium selon la revendication 1, dans lequel l'étape de réaction de la Lanthanite-(Ce) est réalisée à une température de plus de 130 °C jusqu'à 300 °C ou moins, pour produire le composé à base de carbonate de cérium comprenant 50 % en volume ou plus d'hydroxycarbonate de cérium (Ce(OH)•(CO₃)) ayant une structure cristalline hexagonale.

12. Procédé de préparation d'oxyde de cérium comprenant les étapes de production du composé à base de carbonate de cérium selon le procédé de l'une quelconque selon la revendication 1, et de frittage du composé à base de carbonate de cérium.

13. Procédé de préparation d'oxyde de cérium selon la revendication 12, dans lequel l'étape de frittage est réalisée à une température de 300 à 1500 °C.
